# EUROPEAN PATENT APPLICATION

(11) **EP 3 088 666 A1**
(43) Date of publication of application: **02.11.2016**
(21) Application number: 16166805.8
(22) Date of filing: 25.04.2016
(51) Int. Cl.: F01D 5/14, F01D 5/30

(54) **BLADE/DISK DOVETAIL BACKCUT FOR BLADE/DISK STRESS REDUCTION FOR A FIRST STAGE OF A TURBOMACHINE**

(30) Priority: 29.04.2015 US 201514699055
(71) Applicant: General Electric Company, Schenectady, NY 12345 (US)
(72) Inventor: PIROLLA, Peter Paul, Greenville, SC South Carolina 29615-4614 (US); GIFFIN, William Patrick, Greenville, SC South Carolina 29615-4614 (US); ZEMITIS, William Scott, Greenville, SC South Carolina 29615 (US)
(74) Representative: Lee, Brenda

(57) **Abstract**

A turbine portion (8) for a gas turbine includes a first stage rotor disk (50) having a plurality of dovetail slots (70), and a plurality of airfoils (54) coupled to the first stage rotor disk (50). Each of the plurality of airfoils (54) includes a radial centerline (90) and a blade dovetail (84) mounted in a corresponding one of the plurality of dovetail slots (70). At least one of the plurality of dovetail slots (70) and the blade dovetail (84) of one of the plurality of airfoils (54) includes a stress reducing backcut (104-106) spaced between about 1.733-inches (4.402-cm) and about 2.233-inches (5.67-cm) from the radial centerline (90).

## Description

### BACKGROUND OF THE DISCLOSURE

The subject matter disclosed herein relates to the art of gas turbomachines and, more particularly, to a modified blade and/or disk dovetail to reduce blade and/or disk stress.

Gas turbomachines include a compressor portion, a turbine portion and a combustor assembly. The combustor assembly mixes fluid from the compressor portion with a fuel to form a combustible mixture. The combustible mixture is combusted forming hot gases that pass along the turbine portion. The turbine portion converts thermal energy from the hot gases into mechanical rotational energy. More specifically, the turbine portion includes a plurality of stages each of which includes an associated rotor disk and airfoils. Additional fluid from the compressor is passed through the airfoils for cooling purposes. Typically, the airfoils are mounted to the rotor disk through a dovetail and dovetail slot arrangement. During operation, stress may develop at the dovetail and/or dovetail slot. The stress is undesirable and may lead to fatigue that could reduce an overall service life of the airfoil and/or rotor disk.

### BRIEF DESCRIPTION OF THE DISCLOSURE

According to one aspect of an exemplary embodiment, a turbine portion for a gas turbine includes a first stage rotor disk having a plurality of dovetail slots, and a plurality of airfoils coupled to the first stage rotor disk. Each of the plurality of airfoils includes a radial centerline and a blade dovetail mounted in a corresponding one of the plurality of dovetail slots. At least one of the plurality of dovetail slots and the blade dovetail of one of the plurality of airfoils includes a stress reducing backcut spaced between about 1.733-inches (4.402-cm) and about 2.233-inches (5.67-cm) from the radial centerline.

According to another aspect of an exemplary embodiment, a turbomachine includes a compressor portion and a turbine portion operatively connected to the compressor portion. The turbine portion includes a first stage rotor disk having a plurality of dovetail slots and a plurality of airfoils coupled to the first stage rotor disk. Each of the plurality of airfoils includes a radial centerline and a blade dovetail mounted in a corresponding one of the plurality of dovetail slots. A combustor assembly is fluidically connected to the compressor portion and the turbine portion. At least one of the plurality of dovetail slots and the blade dovetail of one of the plurality of airfoils includes a stress reducing backcut spaced between about 1.733-inches (4.402-cm) and about 2.233-inches (5.67-cm) from the radial centerline.

According to yet another aspect of an exemplary embodiment, a turbomachine system includes a compressor portion and a turbine portion operatively connected to the compressor portion. The turbine portion includes a first stage rotor disk having a plurality of dovetail slots and a plurality of airfoils coupled to the first stage rotor disk. Each of the plurality of airfoils includes a radial centerline and a blade dovetail mounted in a corresponding one of the plurality of dovetail slots. A combustor assembly is fluidically connected to the compressor portion and the turbine portion. An intake system is fluidically connected to the compressor portion, an exhaust system is fluidically connected to the turbine portion, and a load operatively connected to one of the compressor portion and the turbine portion. At least one of the plurality of dovetail slots and the blade dovetail of one of the plurality of airfoils includes a stress reducing backcut spaced between about 1.733-inches (4.402-cm) and about 2.233-inches (5.672-cm) from the radial centerline.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 depicts a schematic view of a gas turbomachine, in accordance with an exemplary embodiment;
FIG. 2 depicts a partial view of a first stage rotor and airfoil of the turbomachine of FIG. 1;
FIG. 3 depicts a top view of the airfoil of FIG. 2;
FIG. 4 depicts a partial perspective view of the airfoil of FIG. 3 illustrating a backcut, in accordance with an aspect of an exemplary embodiment; and
FIG. 5 depicts a side view of the airfoil of FIG. 3.

The detailed description explains embodiments of the disclosure, together with advantages and features, by way of example with reference to the drawings.

### DETAILED DESCRIPTION OF THE DISCLOSURE

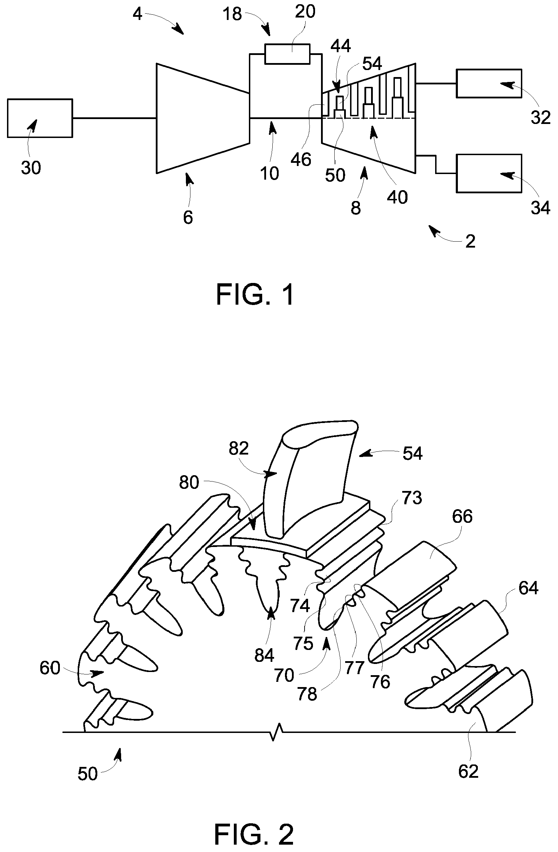

A turbomachine system, in accordance with an exemplary embodiment, is illustrated generally at 2, in FIG. 1. Turbomachine system 2 includes an 836 MW turbomachine 4 having a compressor portion 6 operatively connected to a turbine portion 8 through a common compressor/turbine shaft 10. A combustor assembly 18 includes at least one combustor 20 fluidically connecting compressor portion 6 and turbine portion 8. An intake system 30 is fluidically connected to an inlet (not separately labeled) of compressor portion 6 and an exhaust system 32 is fluidically connected to an outlet (also not separately labeled) of turbine portion 8. In addition, turbine portion 8 is operatively connected to a load 34. It should however be understood that load 34 may also be connected to compressor portion 6. Load 34 may take on a variety of forms including systems that may be mechanically linked to, and/or fluidically connected with, turbomachine 4.

In operation, air is passed through intake system 30 into compressor portion 6. Intake system 30 may condition the air by, for example, lowering humidity, altering temperature and the like. The air is compressed through multiple stages of compressor portion 6 and passed to turbine portion 8 and combustor assembly 18.

The air is mixed with fuel, diluents and the like in combustor 20 to form a combustible mixture. The combustible mixture is combusted in combustor 20 and passed into turbine portion 8 as hot gases. The hot gases flow along a hot gas path (not separately labeled) of turbine portion 8.

As will be discussed more fully below, turbine portion 8 converts thermal and kinetic energy from the hot gases into mechanical, rotational energy that may be employed to drive load 34. Load 34 may also be driven by thermal energy entrained in exhaust gases passing through exhaust system 32. Additional air may be passed from combustor portion 6 into turbine portion 8 as a cooling fluid. Turbine portion 8 includes a plurality of stages 40 that define the hot gas path. Plurality of stages 40 include a least a first stage 44 including a plurality of stationary nozzles 46 and a rotor disk 50 that supports a plurality of vanes or airfoils 54. Nozzles 46 guide the hot gases flowing along the hot gas path into airfoils 54. The hot gases interact with airfoil 54 causing rotor disk 50 to rotate.

As illustrated in FIG. 2, rotor disk 50 includes a body 60 having a first or upstream surface 62, a second or downstream surface 64 and an outer peripheral edge 66. Rotor disk 50 includes a plurality of dovetail slots 70 that extend through first and second surfaces 62 and 64 and which are exposed at outer peripheral edge 66. Each dovetail slot 70 includes a first downstream groove 73, a second downstream groove 74, and a third downstream groove 75. First downstream groove 73 is arranged radially outwardly of second downstream groove 74 which, in turn, is arranged radially outwardly of third downstream groove 75. Each dovetail slot 70 also includes a first upstream groove 76, a second upstream groove 77, and a third upstream groove 78. First upstream groove 76 is arranged radially outwardly of second upstream groove 77 which, in turn, is arranged radially outwardly of third upstream, groove 78. At this point it should be understood, that the term "downstream" refers to a direction opposite to a direction of rotation of rotor disk 50 and the term "upstream" refers to a direction of rotation of rotor disk 50. Each dovetail slot 70 receives a corresponding one of airfoils 54.

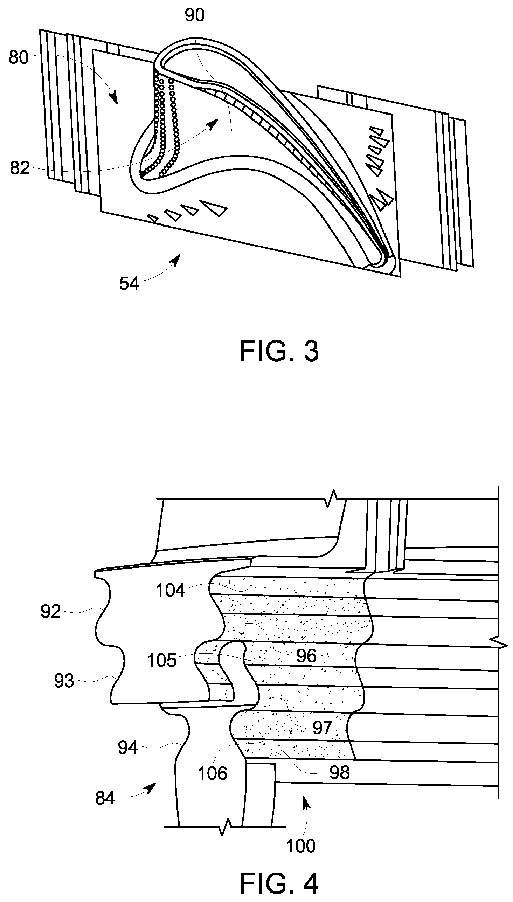

In accordance with an exemplary embodiment illustrated in FIGs. 3-5, each airfoil 54 includes a base 80 from which extends an airfoil portion 82 in a first direction and a blade dovetail 84 in a second, opposing direction. Airfoil 54 also includes a radial centerline 90 that extends through a midpoint of base 80 along a radial axis of rotor disk 50, as shown in FIG. 4. Blade dovetail 84 is configured to engage with dovetail slot 70. More specifically, blade dovetail 84 includes a first downstream tang 92 that is received in first downstream groove 73, a second downstream tang 93 that is received in second downstream groove 74, and a third downstream tang 94 that is received in third downstream groove 75. In addition, blade dovetail 84 includes a first upstream tang 96 that is received in first upstream groove 76, a second upstream tang 97 that is received in second upstream groove 77, and a third upstream tang 98 that is received in third upstream groove 78.

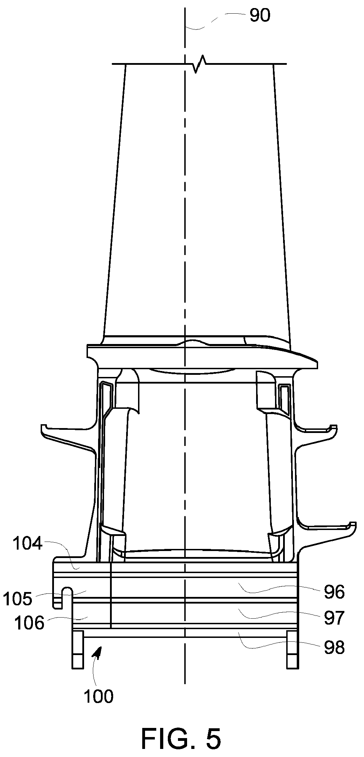

In accordance with an aspect of an exemplary embodiment, blade dovetail 84 includes a material removal area 100. Material removal area 100, in accordance with an aspect of an exemplary embodiment, extends along an outwardly facing surface (not separately labeled) of each of first, second and third upstream tangs 96-98 from a position between about 1.733-inches (4.402-cm) and about 2.233-inches (5.67-cm) from radial centerline 90 to an axial outer edge (also not separately labeled) of blade dovetail 84, as shown in FIG. 5. In accordance with another aspect of an exemplary embodiment, material removal area 100 extends from about 2.133-inches from radial centerline 90 to the axial outer edge of blade dovetail 84. It should however be understood that material removal area may reside on only a single tang, or two of the tangs.

In further accordance with an exemplary embodiment, blade dovetail 84 includes a first backcut 104 formed in material removal area 100 at first upstream tang 96, a second backcut 105 formed in material removal area 100 at second upstream tang 97, and a third backcut 106 formed in material removal area 100 at third upstream tang 98. In accordance with an aspect of an exemplary embodiment, each backcut 104-106 is formed at an angle of between about 0.4° and about 1.0°. In accordance with another aspect of an exemplary embodiment, each backcut 104-106 is formed at an angle of about 0.7°.

In further accordance with an exemplary embodiment, the particular location and size of each backcut 104-106 is determined by airfoil and/or disk geometry to achieve a desired balance between stress reduction on rotor disk 50, and increase an overall service life, and/or provide improved aeromechanics, of airfoil 54. To this end, backcuts 104-106 enhance an overall fatigue life and facilitate stress distribution in blade dovetail 84. Backcuts 104-106 also enhance an overall fatigue life of rotor disk 50. Specifically, backcuts 104-106 increase localized stresses in each airfoil 54 thereby decreasing stresses in rotor disk 50. In this manner, exemplary embodiments lead to an overall fatigue life enhancement of a first one of the plurality of stages 40 of turbine portion 8.

At this point, it should be understood that while described as being on blade dovetail 84, an alternative material removal area may be provided on rotor disk 50. It should be further understood that the backcut can be provided on new, commercial off-the-shelf (COTS) components or formed in components already fielded as part of a maintenance action. It should also be understood that the output of the 836 MW turbomachine may vary depending upon various conditions and/or parameters including load, ambient temperature, and the like. In addition, it should be understood that the backcut of the present disclosure may be applied to a General Electric 9FA04 S1B blade dovetail in accordance with an aspect of an exemplary embodiment. It should also be understood that the 9FA04 turbomachine may, over time, be provided with a different designation.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

The term "about" is intended to include the degree of error associated with measurement of the particular quantity based upon the equipment available at the time of filing the application. For example, "about" can include a range of ± 8% or 5%, or 2% of a given value.

While the disclosure has been described in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

Various aspects and embodiments of the present invention are defined by the following numbered clauses:
1. A turbine portion for a gas turbine comprising:
   a first stage rotor disk including a plurality of dovetail slots;
   a plurality of airfoils coupled to the first stage rotor disk, each of the plurality of airfoils including a radial centerline and a blade dovetail mounted in a corresponding one of the plurality of dovetail slots,
   wherein at least one of the plurality of dovetail slots and the blade dovetail of one of the plurality of airfoils includes a stress reducing backcut spaced between about 1.733-inches (4.402-cm) and about 2.233-inches (5.67-cm) from the radial centerline.
2. The turbine portion according to clause 1, wherein the backcut is spaced about 2.133-inches (5.42-cm) from the radial centerline.
3. The turbine portion according to any preceding clause, wherein the backcut is formed in the blade dovetail.
4. The turbine portion according to any preceding clause, wherein the backcut includes an angle of between about 0.4° and about 3.0°.
5. The turbine portion according to any preceding clause, wherein the backcut includes an angle of about 0.7°.
6. A turbomachine comprising:
   a compressor portion;
   a turbine portion operatively connected to the compressor portion, the turbine portion including a first stage rotor disk including a plurality of dovetail slots and a plurality of airfoils coupled to the first stage rotor disk, each of the plurality of airfoils including a radial centerline and a blade dovetail mounted in a corresponding one of the plurality of dovetail slots; and
   a combustor assembly fluidically connected to the compressor portion and the turbine portion,
   wherein at least one of the plurality of dovetail slots and the blade dovetail of one of the plurality of airfoils includes a stress reducing backcut spaced between about 1.733-inches (4.402-cm) and about 2.233-inches (5.67-cm) from the radial centerline.
7. The turbomachine according to any preceding clause, wherein the backcut is spaced about 2.133-inches from the radial centerline.
8. The turbomachine according to any preceding clause, wherein the backcut is formed in the blade dovetail.
9. The turbomachine according to any preceding clause, wherein the backcut includes an angle of between about 0.4° and about 3.0°.
10. The turbomachine according to any preceding clause, wherein the backcut includes an angle of about 0.7°.
11. A turbomachine system comprising:
   a compressor portion;
   a turbine portion operatively connected to the compressor portion, the turbine portion including a first stage rotor disk including a plurality of dovetail slots and a plurality of airfoils coupled to the first stage rotor disk, each of the plurality of airfoils including a radial centerline and a blade dovetail mounted in a corresponding one of the plurality of dovetail slots;
   a combustor assembly fluidically connected to the compressor portion and the turbine portion;
   an intake system fluidically connected to the compressor portion;
   an exhaust system fluidically connected to the turbine portion; and
   a load operatively connected to one of the compressor portion and the turbine portion,
   wherein at least one of the plurality of dovetail slots and the blade dovetail of one of the plurality of airfoils includes a stress reducing backcut spaced between about 1.733-inches (4.402-cm) and about 2.233-inches (5.67-cm) from the radial centerline.
12. The turbomachine system according to any preceding clause, wherein the backcut is spaced about 2.133-inches from the radial centerline.
13. The turbomachine system according to any preceding clause, wherein the backcut is formed in the blade dovetail.
14. The turbomachine system according to any preceding clause, wherein the backcut includes an angle of between about 0.4° and about 3.0°.
15. The turbomachine system according to any preceding clause, wherein the backcut includes an angle of about 0.7°.

## Claims

1. A turbine portion (8) for a gas turbine comprising:
a first stage rotor disk (50) including a plurality of dovetail slots (70);
a plurality of airfoils (54) coupled to the first stage rotor disk (50), each of the plurality of airfoils (54) including a radial centerline (90) and a blade dovetail (84) mounted in a corresponding one of the plurality of dovetail slots (70),
wherein at least one of the plurality of dovetail slots (70) and the blade dovetail (84) of one of the plurality of airfoils (54) includes a stress reducing backcut (104-106) spaced between about 1.733-inches (4.402-cm) and about 2.233-inches (5.67-cm) from the radial centerline (90).

2. The turbine portion (8) according to claim 1, wherein the backcut (104-106) is spaced about 2.133-inches (5.42-cm) from the radial centerline (90).

3. The turbine portion (8) according to claim 1 or 2, wherein the backcut (104-106) is formed in the blade dovetail (84).

4. The turbine portion (8) according to claim 1, 2 or 3, wherein the backcut (104-106) includes an angle of between about 0.4° and about 3.0°.

5. The turbine portion (8) according to claim 4, wherein the backcut (104-106) includes an angle of about 0.7°.

6. A turbomachine (4) comprising:
a compressor portion (6);
a turbine portion (8) operatively connected to the compressor portion (6), the turbine portion (8) including a first stage rotor disk (50) including a plurality of dovetail slots (70) and a plurality of airfoils (54) coupled to the first stage rotor disk (50), each of the plurality of airfoils (54) including a radial centerline (90) and a blade dovetail (84) mounted in a corresponding one of the plurality of dovetail slots (70); and
a combustor assembly (18) fluidically connected to the compressor portion (6) and the turbine portion (8),
wherein at least one of the plurality of dovetail slots (70) and the blade dovetail (84) of one of the plurality of airfoils (54) includes a stress reducing backcut (104-106) spaced between about 1.733-inches (4.402-cm) and about 2.233-inches (5.67-cm) from the radial centerline (90).

7. The turbomachine (4) according to claim 6, wherein the backcut (104-106) is spaced about 2.133-inches from the radial centerline (90).

8. The turbomachine (4) according to claim 6 or 7, wherein the backcut (104-106) is formed in the blade dovetail (84).

9. The turbomachine (4) according to claim 6, 7 or 8, wherein the backcut (104-106) includes an angle of between about 0.4° and about 3.0°.

10. The turbomachine (4) according to claim 9, wherein the backcut (104-106) includes an angle of about 0.7°.

11. A turbomachine system comprising:
a compressor portion;
a turbine portion operatively connected to the compressor portion, the turbine portion including a first stage rotor disk including a plurality of dovetail slots and a plurality of airfoils coupled to the first stage rotor disk, each of the plurality of airfoils including a radial centerline and a blade dovetail mounted in a corresponding one of the plurality of dovetail slots;
a combustor assembly fluidically connected to the compressor portion and the turbine portion;
an intake system fluidically connected to the compressor portion;
an exhaust system fluidically connected to the turbine portion; and
a load operatively connected to one of the compressor portion and the turbine portion,
wherein at least one of the plurality of dovetail slots and the blade dovetail of one of the plurality of airfoils includes a stress reducing backcut spaced between about 1.733-inches (4.402-cm) and about 2.233-inches (5.67-cm) from the radial centerline.
